Europäisches Patentamt

European Patent Office

Office européen des brevets

(19)

(11) Numéro de publication: **0 168 304**
**A1**

# (12) DEMANDE DE BREVET EUROPEEN

(21) Numéro de dépôt: 85401214.3

(22) Date de dépôt: 18.06.85

(51) Int. Cl.⁴: **G 09 B 9/08**
**G 01 C 21/00**

(30) Priorité: 29.06.84 FR 8410360

(43) Date de publication de la demande:
15.01.86 Bulletin 86/3

(84) Etats contractants désignés:
DE GB SE

(71) Demandeur: THOMSON-CSF
173, Boulevard Haussmann
F-75379 Paris Cedex 08(FR)

(72) Inventeur: Reymond, Jean-Claude
THOMSON-CSF SCPI 173, bld. Haussmann
F-75379 Paris Cedex 08(FR)

(72) Inventeur: Botella, Jean
THOMSON-CSF SCPI 173, bld. Haussmann
F-75379 Paris Cedex 08(FR)

(72) Inventeur: Michel, Georges
THOMSON-CSF SCPI 173, bld. Haussmann
F-75379 Paris Cedex 08(FR)

(74) Mandataire: Benoit, Monique et al,
THOMSON-CSF SCPI 173, Bld Haussmann
F-75379 Paris Cedex 08(FR)

(54) Appareil de visualisation d'images à partir de données enregistrées sur un film, et utilisation pour la navigation aérienne au radar.

(57) L'invention permet de reproduire une image d'un radar explorant un secteur circulaire déterminé autour de l'appareil.

Un lecteur vidéo 10 analyse un film 1 par un balayage centrifuge autour d'un point A représentant l'appareil, et délivre des signaux vidéo SV transmis à un circuit décodeur 30 qui fournit l'altitude $Z_N$ du point N analysé ainsi que son coefficient d'albedo $B_N$. Des moyens de calcul 40 évaluent l'inclinaison de chaque point, son coefficient de réflexion en fonction de son inclinaison et de son coefficient d'albedo, et élaborent un signal de luminance $B_N.L$ proportionnel à ce coefficient de réflexion pour simuler une réponse radar.

./...

FIG_1

-1-

## APPAREIL DE VISUALISATION D'IMAGES
## A PARTIR DE DONNEES ENREGISTREES SUR UN FILM
## ET UTILISATION POUR LA NAVIGATION AERIENNE AU RADAR

L'invention concerne un appareil de visualisation d'images élaborées à partir de données enregistrées sur un film photographique. Une utilisation est prévue pour l'aide à la navigation aérienne à l'aide du radar. L'appareil est embarqué et complète ou remplace le radar de l'aéronef.

Les avions, plus particulièrement les avions d'arme, sont généralement équipés de radars qui, outre des fonctions relatives au tir, permettent de visualiser, après traitement, des images du sol. Le pilote interprète ces images et peut s'en servir pour compléter ou vérifier les informations relatives à la navigation données par des systèmes électroniques de bord.

Un but de l'invention est de présenter simultanément l'image acquise par le radar de bord et une image synthétique élaborée en temps réel à partir d'une banque de données, et correspondante à l'image acquise. Ces deux images peuvent être visualisées, soit chacune sur un écran différent, soit en superposition sur un seul écran, une image étant visualisée par exemple en vert, et l'autre en rouge.

Il existe, en outre, des appareils indicateurs cartographiques servant à visualiser des cartes géographiques à bord d'aéronefs. Certains de ces appareils font défiler sur un dispositif de visualisation cathodique la carte des régions survolées. Ces cartes peuvent mettre plus ou moins en évidence certains aspects des régions survolées, par exemple, le relief, les surfaces boisées, les agglomérations ... .

Il est décrit dans le document de brevet français 2 357 022, un indicateur cartographique qui comporte : la carte enregistrée sur un film photo supporté par des bobines, un lecteur vidéo d'images selon un balayage ligne par ligne, des moyens d'asservissement de l'image en fonction de la latitude, de la longitude et du cap de l'avion, et des circuits de traitement pour visualiser les signaux vidéo de lecture. Le lecteur vidéo comporte, soit une source lumineuse et une caméra de télévision, soit un tube d'analyse à spot mobile (flying-spot) et un photodétecteur (photomultiplicateur ou autre), des éléments optiques de transport d'image et de focalisation, et un générateur des signaux de balayage de la caméra ou du tube flying-spot. Dans le cas d'un film couleur, il faut rajouter un séparateur optique trichome et trois photodétecteurs ou caméras de prise de vues, au lieu d'un élément.

Dans certains appareils de ce type, les données enregistrées sur le film concernent l'altitude du sol. D'autre part une structure de ce genre, où le film est un levé d'altitude, permet de restituer la valeur d'altitude du point analysé. Le levé est enregistré sur le film sous la forme d'une pluralité de teintes ou de couleurs correspondant à différentes tranches d'altitude. Après la lecture sur le film des teintes des points successifs du parcours suivi, on fait correspondre à chacune d'elles, au moyen d'une mémoire morte programmable, à chacune d'elles, l'altitude correspondante qui est alors visualisée sur l'indicateur cathodique. On prévoit également de tenir compte de l'altitude instantanée de l'aéronef pour effectuer cette visualisation en perspective et la rendre plus réelle.

Dans le but de simuler l'écho radar, une particularité de l'invention consiste à coder sur un film couleur l'altitude selon au moins une composante chromatique, et de coder avec une autre composante l'albedo du terrain. On rappelle que l'albedo est la fraction de lumière reçue qu'un corps non lumineux diffuse.

Une autre particularité consiste à évaluer à partir du film, le taux de réflexion, par rapport à l'avion, des endroits analysés, et de simuler un faisceau radar balayant ces endroits.

L'objet de l'invention est de réaliser un appareil de visualisation à partir de données enregistrées sur un film photographique et correspondant à des levés d'altitude de zones déterminées, codés selon une pluralité de couleurs prédéterminées afin de couvrir une gamme totale d'altitude avec une précision désirée. Il comporte un dispositif d'analyse point par point du film délivrant des signaux vidéo, un circuit de décodage des signaux en temps réel identifiant la couleur de chaque point et lui faisant correspondre son altitude, un dispositif de visualisation cathodique des signaux traités, et des moyens de commande pour élaborer des différents signaux de synchronisation et de commande, ces moyens de commande recevant d'un dispositif annexe l'information de position de l'appareil. Les données comportent les relevés des valeurs d'albedo des points desdites zones, et le circuit de traitement fait correspondre en outre à la couleur d'un point sa valeur d'albedo. Des moyens de calcul reçoivent les altitudes des points successivement analysés, et les valeurs respectives d'albedo. Ces moyens calculent en fonction de la position de l'appareil un taux de réflexion de ladite zone de chacun desdits points, et délivrent pour chaque point un signal de luminance proportionnel au taux de réflexion afin de simuler sur le dispositif de visualisation la réflexion d'un rayon radar balayant les points réels correspondant aux points analysés.

Les particularités et avantages de l'invention apparaîtront dans la description qui suit, donnée à titre d'exemple non limitatif, et illustrée par les figures annexées qui représentent :

- Figure 1, un diagramme général d'un appareil selon l'invention ;

- Figure 2, un schéma relatif au balayage du film et au principe utilisé ;

- Figure 3, un schéma relatif au balayage de plusieurs points d'une même radiale selon le principe de l'invention ;

- Figure 4, un diagramme détaillé du circuit de décodage et des moyens de calcul.

La description de l'appareil de visualisation selon l'invention est faite, dans ce qui suit, dans le cadre d'une utilisation plus particulièrement envisagée pour la navigation aérienne. L'appareil est installé à bord d'un aéronef conjointement avec d'autres instruments et appareils de bord, tels que, altimètre, calculateur de bord, indicateur cartographique... .

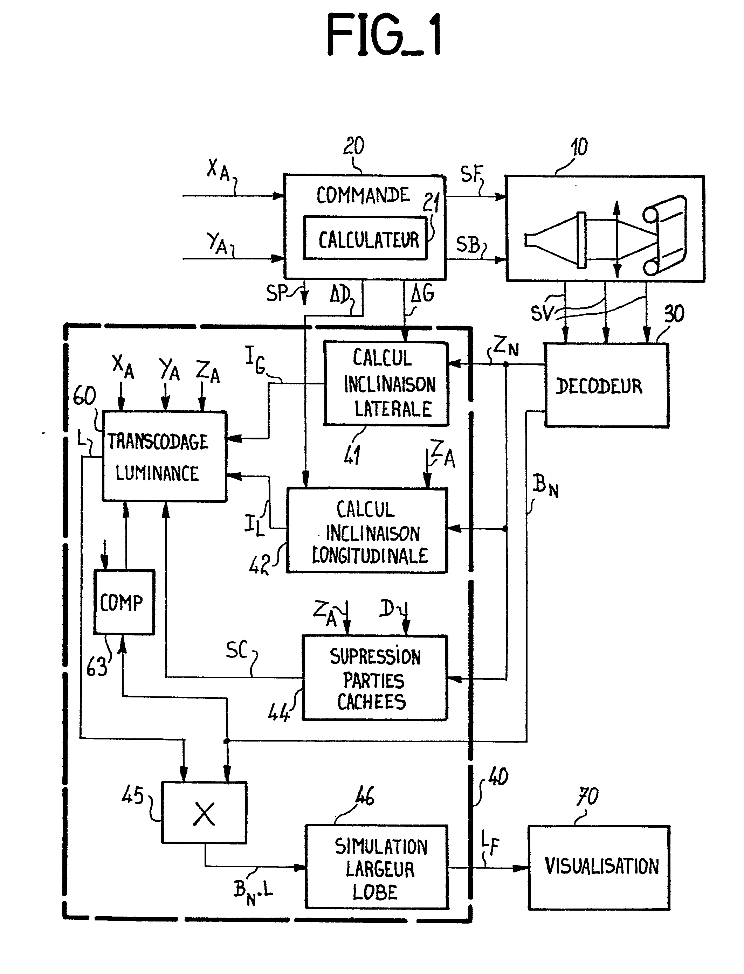

En se reportant à la Fig.1, l'appareil indicateur comporte essentiellement un lecteur vidéo 10 du film 1, des moyens de commande 20, un circuit de décodage 30, des moyens de calcul 40 et un dispositif de visualisation 70.

Le film 1 utilisé dans le lecteur vidéo 10 est un film couleur sur lequel sont enregistrées des données concernant l'altitude et l'albedo d'un grand nombre de points d'une zone géographique déterminée. Chaque photographie du film est constituée par un levé précis d'altitude et d'albedo d'une région. Ce levé est enregistré selon différentes couleurs qui sont prédéterminées en relation avec les différentes tranches d'altitude et degrés d'albedo à traduire. On utilise au moins une composante chromatique pour coder l'altitude, et une autre pour coder l'albedo. Ce dernier codage peut être sous forme soit analogique, soit à niveaux quantifiés. Chaque tranche d'altitude, associée à un degré d'albedo est affectée à une couleur déterminée.

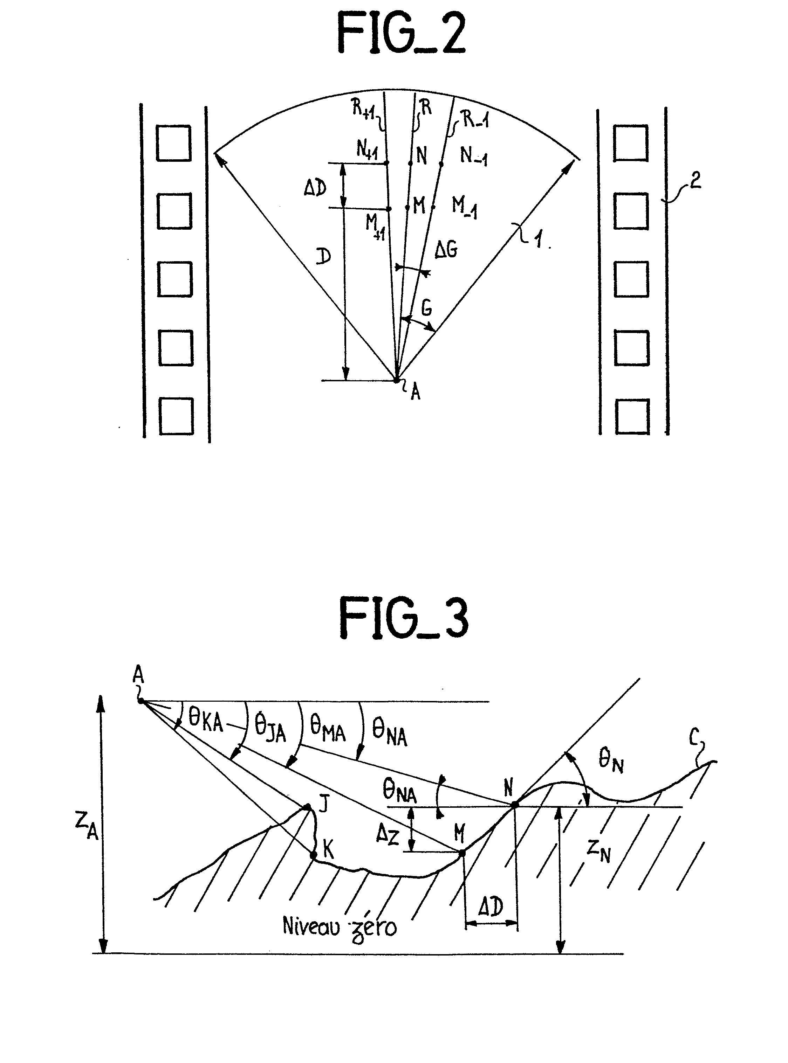

Le secteur circulaire 1 représenté sur la Fig.2 symbolise le balayage d'analyse du lecteur sur le film 2. Il correspond au secteur géographique circulaire qui serait exploré par un radar à l'avant du point avion A. Trois radiales R-1, R et R+1 sont représentées ainsi que les deux points consécutifs M et N sur chacune de ses radiales. On note par G l'angle d'orientation en gisement de la radiale R. $\Delta$ G est l'incrément de gisement entre deux radiales. Le point M est éloigné du point A de la distance D, $\Delta$ D est l'incrément en éloignement entre deux points consécutifs M et N. Pour des raisons décrites ultérieurement et concernant la détermination des faces cachées du terrain, le balayage est centrifuge.

Sur la Fig.3, quatre points J, K, M et N d'une même radiale ont été représentés. Il se situent sur une courbe C symbolisant les variations d'altitude du terrain le long de la radiale. En considérant le point N, $Z_N$ est son altitude, $\theta_N$ l'angle d'inclinaison longitudinale du sol par rapport à l'horizontale en ce point, $\theta_{NA}$ l'angle sous lequel est vu ce point à partir du point A représentant l'avion volant à une altitude $Z_A$. Le point K n'est pas visible du point A, ceci se traduit par le fait que l'angle $\theta_{KA}$, par rapport à l'horizontale est supérieur à l'angle $\theta_{JA}$ correspondant au point J qui est plus proche du point A que le point K.

Par ailleurs on définit l'inclinaison longitudinale $I_D$ comme la tangente de la somme des angles $\theta_N$ et $\theta_{NA}$ : $I_D = tg\,(\theta_N + \theta_{NA})$. En considérant les figures 2 et 3, on définit l'inclinaison latérale $I_G$ comme le rapport des incréments d'altitude et de gisement :

$$I_G = \frac{\Delta Z_N}{\Delta G_N} \quad avec \quad \Delta G_N = \Delta G.\,D_N.$$

En se reportant à la figure 1, les moyens de commande 20 élaborent à l'aide d'un calculateur 21 les différents signaux de commande et de synchronisation nécessaires au fonctionnement de l'ensemble. Ces signaux comprennent des signaux de commande du balayage SB de lecture appliqués au lecteur vidéo 10, un signal SP de synchronisation point par point des valeurs analysées, un signal SF de commande de positionnement du film, un signal d'incrément de longeur de radiale Δ D et un signal d'incrément de position angulaire de radiale Δ G.

Le lecteur vidéo est du type de celui décrit dans le brevet français 2 504 673 c'est-à-dire à spot mobile et son balayage du type ligne par ligne. Le film étant en couleur le lecteur délivre sur deux ou trois voies (rouge, verte, bleue) des signaux vidéo couleur SV.

Les signaux vidéo SV sont appliqués à l'entrée du circuit de décodage 30 qui associe à chacune des couleurs analysées deux valeurs numériques correspondant respectivement l'altitude $Z_N$ et à l'albedo $X_N$ correspondant au point N balayé.

Selon l'invention on applique la valeur d'altitude $Z_N$ à l'entrée des moyens de calcul 40 pour évaluer par rapport à l'avion l'orientation et la réflexion du sol au point analysé. A cet effet, l'altitude $Z_N$ est appliquée à l'entrée de deux circuits de calcul d'inclinaison latérale 41 et longitudinale 42 dont le fonctionnement est décrit ultérieurement. Les deux valeurs d'inclinaison latérale $I_G$ et longitudinale $I_D$ qui en sont issues, sont appliquées à l'entrée d'un circuit de luminance 60 qui délivre un signal de luminance L en fonction de ces deux inclinaisons. Un circuit de suppression des parties cachées 44 reçoit la valeur d'altitude $Z_N$ et l'altitude $Z_A$ de l'aéronef et détermine si le point analysé est caché ou vu de l'aéronef. Il fournit un signal SC qui valide ou non le signal de luminance. La valeur de l'albedo $B_N$ pondéré ce signal de luminance à l'aide d'un circuit multiplicateur 45.

Les moyens de calcul 40 peuvent également comprendre un circuit simulateur de largeur de lobe 46 qui reçoit le signal de luminance pondérée $L.B_N$ et contribue à rendre la visualisation plus réaliste en délivrant le signal de luminance finale $L_F$. La structure et le fonctionnement de ces circuits sont détaillés plus loin. Le signal de luminance finale $L_F$ est appliqué au dispositif de visualisation cathodique 70.

Ce dernier peut être celui du dispositif de visualisation du radar, et dans ce cas, l'image de l'écho réel du radar est visualisée selon une composante couleur (par exemple vert) et l'image élaborée à partir du signal $L_F$ selon une autre couleur (par exemple rouge). Il peut en outre être différent de celui du radar et être constitué d'un dispositif de visualisation réservé uniquement à l'appareil selon l'invention, et ou à d'autres appareils de visualisation d'images synthétiques (appareils cartographiques).

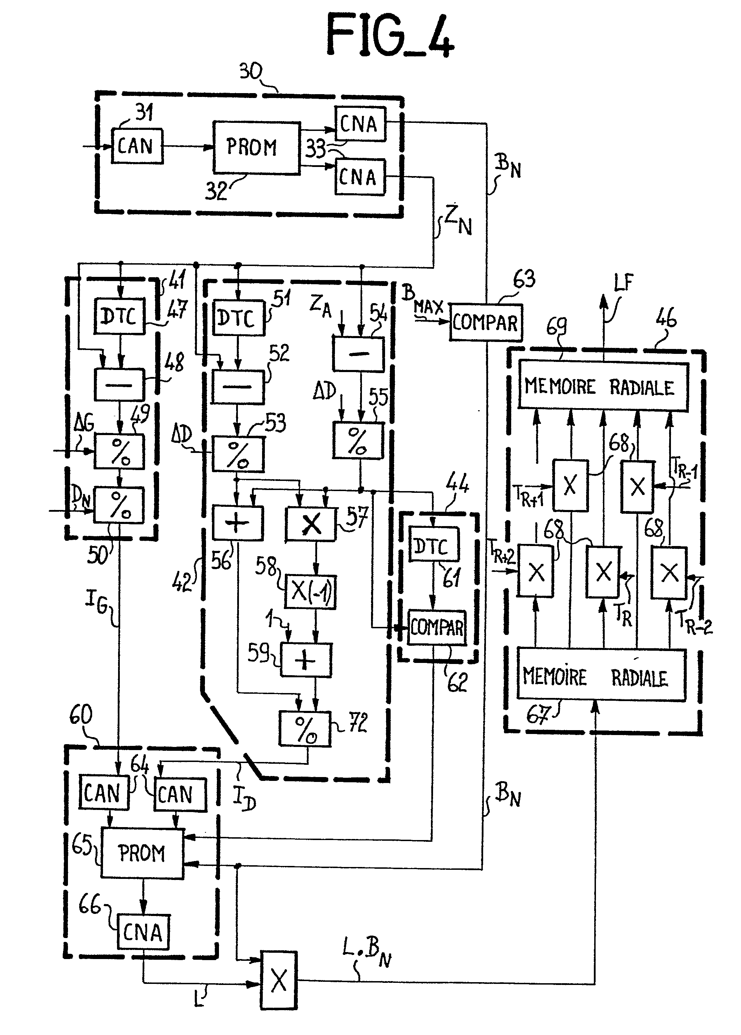

En se reportant à la Fig.4, le circuit de décodage 30 reçoit les signaux vidéo SV qui traversent un convertisseur analogique-numérique 31. Une mémoire morte programmable 32 fait ensuite correspondre à chaque valeur numérique décodée les valeurs $Z_N$ et $B_N$. Un nombre déterminé de bits, par exemple cinq (deux pour le rouge, trois pour le bleu) est réservé pour coder l'altitude $Z_N$. Le reste des bits, par exemple trois pour le vert si la mémoire délivre un octet, est réservé pour coder l'albedo $B_N$. Chacune de ces deux valeurs numériques est mise sous forme analogique par un convertisseur numérique-analogique 33.

Dans le circuit de calcul d'inclinaison latérale 41, on utilise un premier ensemble de mémoires à décalage 47 tel qu'un premier dispositif à transfert de charge, plus communément appelé DTC, pour stocker les altitudes d'un nombre de points égal à celui des points d'une radiale. De cette manière, lorsque l'altitude $Z_N$ du point N de la radiale est appliquée à l'entrée du DTC 47, c'est l'altitude $Z_{N-1}$ du point N de la radiale précédente $R_{-1}$ qui en sort. On utilise un premier soustracteur 48 pour faire la différence $Z_N - Z_{N-1}$. Ce circuit reçoit donc directement l'altitude $Z_N$ de la sortie du décodeur 30 de l'altitude $Z_{N-1}$ de la sortie du DTC. La différence latérale d'altitude $Z_N - Z_{N-1}$ est appliqué à un premier diviseur 49 qui reçoit l'incrément en gisement $\Delta G$. Ce diviseur délivre la valeur $\Delta Z_N/\Delta G$, qui, divisée par $D_N$ dans un diviseur 50 donne l'inclinaison latérale $I_G$.

Dans le circuit de calcul d'inclinaison longitudinale 42, on utilise une première mémoire à décalage 51 pour mémoriser l'altitude $Z_N$ du point analysé. Un deuxième soustracteur 52 reçoit la sortie de cette première mémoire et la sortie du décodeur 30. De cette manière il reçoit l'altitude $Z_N$ d'un point N et l'altitude $Z_M$ du point précédent de la même radiale. Il délivre la valeur $\Delta Z_D$ qui est la différence longitudinale d'altitude $Z_N - Z_M$. Un deuxième diviseur 53 reçoit cette différence et l'incrément de radiale $\Delta D$ et fournit la valeur $Z_N - Z_M/\Delta D = tg(\theta_N)$.

L'inclinaison longitudinale doit être calculée en fonction de la position de l'aéronef. C'est-à-dire qu'il faut tenir compte de l'angle $\theta_{NA}$ sous lequel on voit le point N de l'aéronef. Dans ce but des circuits de calcul de tangente calculent la différence d'altitude de $Z_A - Z_N$ entre l'aéronef et le point analysé au moyen d'un troisième soustracteur 54 qui reçoit la sortie du décodeur 30 et l'altitude $Z_A$ d'un altimètre de bord non représenté. La sortie du soustracteur 54 est connectée à la première des deux entrées d'un troisième diviseur 55 dont la deuxième entrée reçoit l'incrément de radiale $\Delta D$. Ce diviseur délivre le quotient de la différence

$Z_A - Z_N$ par l'incrément $\Delta D$, c'est-à-dire la tangente tg $(\theta_{NA})$.

Disposant des valeurs tg $(\theta_{NA})$ et tg $(\theta_N)$ il est possible d'obtenir la tangente de l'angle $\theta_N + \theta_{NA}$ car :

$$tg\,(\theta_N + \theta_{NA}) = \frac{tg\,(\theta_N) + tg\,(\theta_{NA})}{1 - tg\,(\theta_N).tg\,(\theta_{NA})}$$

L'angle $\theta_N + \theta_{NA}$ représentant l'angle d'inclinaison longitudinale, par rapport à l'aéronef, de la facette de terrain définie par le point analysé N. Les sorties des deuxième et troisième diviseurs 53 et 55 sont appliquées aux entrées d'un sommateur 56 et d'un premier multiplicateur 57. Les sorties de ces deux circuit délivrent respectivement la somme tg $(\theta_N)$ + tg $(\theta_{NA})$ et le produit tg $(\theta_N).tg\,(\theta_{NA})$. Le produit est inversé dans un circuit inverseur 58 qui peut être un amplificateur opérationnel monté en inverseur. La sortie de l'inverseur est connectée à un deuxième sommateur qui reçoit également la valeur constante 1. La sortie de ce sommateur fournit un signal représentant $1 - tg\,(\theta_N).tg\,(\theta_{NA})$ et est connectée à la première entrée d'un quatrième diviseur 72. Ce dernier reçoit sur sa deuxième entrée la sortie du premier sommateur 56. Il fournit donc le quotient

$$tg\,(\theta_n) + tg\,(\theta_{NA})/1 - tg\,(\theta_N).tg\,(\theta_{NA})$$

qui constitue l'inclinaison longitudinale $I_D$.

Les circuits effectuant ce calcul sont assemblés dans le circuit d'inclinaison longitudinale 42 du sol au point analysé. Le codage de l'altitude et de l'albedo n'étant pas fait de façon extrêmement précise, il n'est pas opportun de calculer le signal de luminance avec une grande précision. Pour cette raison on a choisi d'utiliser une table de correspondance plutôt que d'élaborer le signal par un calcul analogique plus complexe à l'aide d'un calculateur spécifique.

Le circuit de luminance 60 comprend deux convertisseurs analogique-numérique 64 pour numériser les signaux d'inclinaison latérale $I_G$ et longitudinale $I_D$, une mémoire morte programmable 65 qui fait correspondre à chaque couple $I_G$, $I_D$ une valeur de luminance, et un convertisseur numérique-analogique 66 pour remettre le signal sous forme analogique repérée L. Ce dernier est ensuite multiplié par l'albedo en 45.

Le circuit de suppression des parties cachées 44 utilise les circuits de calcul de tangente 54 et 55. En outre la sortie du troisième diviseur 55 est appliquée directement à la première entrée d'un premier comparateur 62 et indirectement à la deuxième entrée de ce dernier, après avoir été, retardée dans une deuxième mémoire 61. Ceci permet de comparer les angles $\theta_N$ et $\theta_M$ sous lesquels on voit deux points consécutifs N et M d'une même radiale, et d'en déduire si le plus proche M, cache, ou non, le plus éloigné N. Si ce dernier est visible, le premier comparateur 62 valide le transcodage de luminance en 60 par son signal de sortie SC qui est connecté à la mémoire morte 65. Bien sur, si le point est caché par le précédent, le transcodage n'est pas validé.

Le signal d'albedo $B_N$ issu du décodeur 30 est comparé à une valeur maximale d'albedo $B_{MAX}$ dans un deuxième comparateur 63, par exemple un comparateur à seuil dont la sortie valide ou non la valeur de luminance en 60. Si $B_N$ est inférieur à $B_{MAX}$, cette valeur est validée. Si $B_N$ est égal à $B_{MAX}$, le circuit affecte au signal L la luminance maximale $L_{MAX}$. En effet, il s'avère que pour certaines surfaces, dont le coefficient d'albedo est extrêmement élevé, même si elles sont inclinées de façon peu favorable à la réflexion d'un écho radar, ce dernier est très intense. On choisit donc de lui donner la valeur maximale.

Le principe du circuit de simulation de largeur de lobe 46 est le suivant. Pour visualiser le point N de la radiale R, on mémorise un même nombre de radiales de part et d'autre de la radiale R, par exemple deux. On affecte ensuite à chacune des radiales un coefficient, $T_{R-2}$, $T_{R-1}$, $T_R$, $T_{R+1}$, $T_{R+2}$ caractérisant, la position de la radiale par rapport à la radiale centrale R, et sa proportion de luminance par rapport à la luminance L. Les coefficients sont dégressifs au fur et à mesure que l'on s'éloigne de la radiale centrale R, et leur somme est égale à 1. Le jeu de coefficient pour cinq radiales peut être par exemple

$$T_{R-2} = 0,05; \; T_{R-1} = 0,2; \; T_R = 0,5; \; T_{R+1} = 0,2; \; T_{R+2} = 0,05.$$

Ainsi, le faisceau visualisé ne se réduit pas à un seul point, mais à cinq points rendant plus réaliste l'aspect de l'image.

A la sortie du deuxième multiplicateur 45 le signal L est appliqué à l'entrée du circuit de simulation de lobe 46. Ce circuit comprend un nombre impair, égal au nombre de radiales du lobe, de mémoires de radiale 67, telles des dispositifs à transfert de charge, et mises en série. De plus, la sortie de chaque mémoire constitue une voie différente qui délivre à un instant donné le signal de luminance $B_N.L$ d'un point N d'une des cinq radiales consécutives. Ces sorties sont connectées chacune à un atténuateur 68 qui multiplie le signal de chaque radiale par le coefficient $T_i$ attribué au numéro de la radiale i. Le temps de balayage par le radar de la zone à surveiller étant beaucoup plus long que celui d'un balayage du dispositif de visualisation 70, les sorties de ces atténuateurs sont appliquées à l'entrée d'un circuit mémoire d'image 69.

Plusieurs utilisations sont possibles, notamment pour la navigation aérienne :

- comparaison de l'image théorique et de l'image réellement observée ;

- même application que ci-dessus mais avec corrélation mathématique permettant le recalage de navigation ;

- simulation d'images radar.

On peut utiliser également le principe inverse de l'invention, c'est-à-dire : comparer l'image acquise par un radar réel avec l'image théorique ne tenant compte que du relief. Ceci permet une estimation de l'albedo, donc la détermination de la nature du sol (métal, béton, batiment, etc...).

## REVENDICATIONS

1. Appareil de visualisation d'images élaborées à partir de données enregistrées sur un film photographique (1) et correspondant à des levés d'altitude de zones déterminées codés selon une pluralité de couleurs prédéterminées afin de couvrir une gamme totale d'altitude avec la précision désirée par la variation d'au moins une première composante chromatique, comportant un dispositif d'analyse 10 point par point du film délivrant des signaux vidéo (SV), un circuit de décodage (30) des signaux en temps réel identifiant la couleur de chaque point et lui faisant correspondre son altitude, un dispositif de visualisation cathodique (70) des signaux traités, et des moyens de commande (20) pour élaborer des différents signaux de synchronisation et de commande, ces moyens de commande recevant d'un appareil annexe l'information de position de l'appareil, l'appareil étant caractérisé en ce que lesdites données comportent les relevés des valeurs d'albedo des points desdites zones par la variation d'une deuxième composante chromatique, le circuit de décodage (30) fait correspondre en outre à la couleur d'un point sa valeur d'albedo (B), l'appareil comportant des moyens de calcul (40) qui reçoivent les altitudes décodées $Z_N$ des points (N) successivement analysés et les valeurs respectives d'albedo $(B_N)$, qui calculent en fonction de la position de l'appareil un taux de réflexion de ladite zone en chacun desdits points, et qui délivrent pour chaque point un signal pondéré de luminance $(B_N.L)$ proportionnel au taux de réflexion afin de simuler sur le dispositif de visualisation la réflexion d'un rayon radar balayant les points réels correspondant aux points analysés.

2. Appareil selon la revendication 1, caractérisé en ce que les moyens de commande (20) reçoivent d'appareils annexes les coordonnées de la position de l'appareil élaborent des signaux de balayage (SB) radial centrifuge centré autour dudit point appareil, un signal de position (SF) du film dans le lecteur vidéo (10), un signal d'incrément de longueur de radiale (Δ D), un signal d'incrément de position angulaire de radiale (Δ G), et un signal de synchronisation (SP) point par point.

3. Appareil selon la revendication 1 ou 2, dont l'analyse du film se fait par un balayage radial centrifuge, caractérisé en ce que les moyens de calcul comportent un circuit de calcul de l'inclinaison latérale (41) recevant l'atitude ($Z_N$) des points analysés, un circuit de calcul de l'inclinaison longitudinale (42) recevant l'altitude ($Z_N$) desdits points, un circuit de luminance (60) recevant les sorties desdits circuits de calcul d'inclinaison pour élaborer un signal de luminance (L) en fonction de l'inclinaison du terrain, un circuit de suppression des parties cachées (44) recevant l'altitude ($Z_N$) desdits points et dont la sortie valide le signal de luminance, et un circuit multiplicateur (45) recevant du circuit de transcodage la valeur d'albedo ($B_N$) du point analysé pour pondérer le signal de luminance et fournir le signal de luminance ($B_N$.L).

4. Appareil selon la revendication 3, caractérisé en ce que le circuit de calcul de l'inclinaison latérale (41) comprend un premier ensemble de mémoires à décalage (47) recevant du circuit de décodage (30) l'altitude ($Z_N$) de chaque point qui délivre l'altitude ($Z_{N-1}$) du point N de la radiale précédente (R-1), un premier soustracteur (48) recevant les altitudes respectives ($Z_N$ et $Z_{N-1}$) de deux points N de même distance à l'appareil mis de deux radiales consécutives et délivrant la différence de leurs altitudes, un premier diviseur (49) recevant ladite différence et l'incrément de gisement (Δ G), et un deuxième diviseur (50) recevant la sortie du premier diviseur et la distance ($D_N$) du point considéré (N) à l'appareil et fournissant le quotient $\Delta Z_N/\Delta G_N.D_N$ qui est l'inclinaison latérale (IG).

5. Appareil selon la revendication 3 ou 4, caractérisé en ce que les circuits de calcul de l'inclinaison longitudinale (42) et de suppression des parties cachées (44) ont en commun un circuit de calcul de tangente (73) de l'angle ($\theta_{NA}$) sous lequel le point analysé (N) est vu du point (A) représentant l'appareil, comprenant un troisième soustracteur (54) recevant l'altitude ($Z_N$) du point analysé et l'altitude ($Z_A$) de l'appareil, appliquant la différence à un troisième diviseur (55) qui divise cette différence par l'incrément d'éloignement ($\Delta$ D).

6. Appareil selon la revendication 3, 4 ou 5, caractérisé en ce que le circuit de calcul de l'inclinaison longitudinale (42) comprend une première mémoires a décalage (51) recevant du circuit de décodage (30) l'altitude ($Z_N$) de chaque point N, délivrant l'altitude ($Z_{N-1}$) du point N-1 précédant le point N, un deuxième soustracteur (52) recevant les altitudes respectives ($Z_N$ et $Z_{N-1}$) des deux points consécutifs et délivrant leur différence, un diviseur (53) recevant ladite différence et l'incrément d'éloignement de radiale ($\Delta$ D) et fournissant leur quotient (tg $\theta_N$), et un deuxième circuit de calcul de tangente (71) de l'angle d'inclinaison ($\theta_N$) du sol au point analysé fournissant l'inclinaison longitudinale ($I_D$).

7. Appareil selon l'une quelconque des revendication 3 à 6, caractérisé en ce que le circuit de suppression des parties cachées (44) comprend un circuit de calcul de tangente (73) de l'angle $\theta_{NA}$ sous lequel le point analysé (N) est vu du point (A) représentant l'appareil, une deuxième mémoire à décalage (61) pour mémoriser la tangente du même angle du point précédent, et un comparateur (62) pour comparer les tangentes de deux points consécutifs.

8. Appareil selon les revendications 6 et 7, caractérisé en ce que le circuit de luminance (60) reçoit les inclinaisons latérale ($I_G$) et longitudinale ($I_D$) pour les numériser dans des convertisseurs analogique-numérique (64), leur faire correspondre par une mémoire morte programmable (65) une valeur de luminance correspondante (L) remise sous forme analogique dans un convertisseur numérique-analogique (66), le signal de luminance (L) n'étant validé par la sortie du premier comparateur (62) que si le point (N) analysé est vu de l'appareil.

9. Appareil selon l'une quelconque des revendications précédentes, caractérisé en ce que les moyens de calcul possèdent un circuit de simulation de longueur de lobe (46) répercutant le signal pondéré ($B_N \cdot L$) de luminance au point (N) analysé sur les mêmes

14

points des radiales voisines avec des coefficients (T).

10. Appareil selon la revendication 9, caractérisé en ce que le signal d'albedo ($B_N$) est comparé à une valeur maximale ($B_{MAX}$) dans un deuxième comparateur (63) dont la sortie ne valide la sortie de la mémoire morte programmable (65) que si le signal d'albedo est inférieur à ladite valeur maximale, et affecte au signal de luminance (L) la valeur maximale lorsque le signal d'albedo est égale à cette valeur.

11. Appareil selon l'une quelconque des revendication précédentes utilisé à bord d'un aéronef pour reproduire l'image théorique d'un radar explorant le terrain correspondant à la zone balayée sur le film.

0168304

1/3

FIG_1

# FIG_2

# FIG_3

# FIG_4

# RAPPORT DE RECHERCHE EUROPEENNE

Office européen
des brevets

0168304

Numero de la demande

EP 85 40 1214

## DOCUMENTS CONSIDERES COMME PERTINENTS

| Categorie | Citation du document avec indication. en cas de besoin. des parties pertinentes | Revendication concernee | CLASSEMENT DE LA DEMANDE (Int Cl 4) |
|---|---|---|---|
| X | US-A-3 294 891 (ANTUL et al.) <br> * Colonne 5, ligne 67 - colonne 6, ligne 41; colonne 7, ligne 1 - colonne 9, ligne 60 * | 1-9 | G 09 B 9/08 <br> G 01 C 21/00 |
| X | FR-A-1 323 211 (CURTISS WRIGHT) <br> * Page 2, colonne 2 - page 3, colonne de droite * | 1-9 | |
| A | US-A-3 192 522 (R.L. BURTNER) <br> * En entier * | 11 | |
| A | FR-A-2 452 139 (SOLARTRON) | | |
| A | US-A-4 198 762 (M.V. LAMASNEY) | | |

DOMAINES TECHNIQUES
RECHERCHES (Int. Cl.4)

G 09 B
G 01 C
F 41 G

Le présent rapport de recherche a été établi pour toutes les revendications

| Lieu de la recherche | Date d'achèvement de la recherche | Examinateur |
|---|---|---|
| LA HAYE | 07-10-1985 | DE BUYZER H.J. |